# EUROPEAN PATENT SPECIFICATION

(11) **EP 1 430 391 B1**
(45) Date of publication and mention of the grant of the patent: **15.06.2005**
(21) Application number: 02775801.0
(22) Date of filing: 13.09.2002
(51) Int. Cl.: G06F 7/58

(54) **HASH-BASED PSEUDO-RANDOM NUMBER GENERATOR**
AUF HASH BASIERTER PSEUDOZUFALLSZAHLENGENERATOR
GENERATEUR DE NOMBRES PSEUDO-ALEATOIRES FONDE SUR LE HACHAGE

(30) Priority: 26.09.2001 US 963857
(43) Date of publication of application: 23.06.2004
(73) Proprietor: INTEL CORPORATION, Santa Clara, CA 95052 (US)
(72) Inventor: RUEHLE, Mike, Santa Clara, CA 95051 (US)
(74) Representative: Dunlop, Hugh Christopher
(86) International application number: PCT/US2002/029080
(87) International publication number: WO 2003/027832

(56) References cited:
- EP-A- 0 365 930
- EP-A- 0 949 563
- US-A- 5 627 894

## Description

### BACKGROUND OF THE INVENTION

### 1. Field of the Invention

The invention pertains generally to computers. In particular, it pertains to generating pseudo-random numbers.

### 2. Description of the Related Art

Many forms of security, such as data encryption, make use of random numbers to increase the difficulty of code-breaking. Such encryption and random number generation is most often performed with computers. However, a computer uses a finite set of known instructions and known timing relationships, so anything produced by a computer is theoretically not random. But by following the right kind of complex algorithm a computer can calculate a sequence of numbers that appears random and is difficult to predict, even when the past history of the number sequence is known. A pseudo-random number generator (PRNG) is called pseudo-random because it produces its output by iterating some complex algorithm on a relatively small set of input data (which may or may not be random), and not by sampling some truly random physical process. The value of a PRNG in security applications is based on the difficulty of determining the value of a particular output number, based on a full or partial history of previous output numbers from the PRNG and/or input numbers to the PRNG.

Some PRNGs use an iterative one-way hash algorithm, which takes a first number, transforms it through an algorithm into a second number, and then uses the second number as an input to the algorithm to create a third number, which becomes the input to the algorithm to create a fourth number, etc. If the algorithm is sufficiently complex, predicting one number from the previous numbers is very difficult. However, if a hostile attacker learns the PRNG algorithm, he may be able to predict all future outputs because of the inflexible relationship between the input and output of the PRNG.

A conventional way to reduce this risk is to also hash in the value of a free-running counter at each stage. This increases the difficulty of predicting a given number, and thereby breaking the code, but the output of a counter is predictably linear. With sufficient resources a dedicated attacker can combine the predictability of the counter with the already-known characteristics of the algorithm to determine what a given pseudo-random number will be and thus permit decryption of an encrypted message by a hostile party.

US-A-5 627 894 teaches pseudo random number generation in which samples of a free running clock are used to add randomness.

### BRIEF DESCRIPTION OF THE DRAWINGS

The invention may best be understood by referring to the following description and accompanying drawings that are used to illustrate embodiments of the invention. In the drawings:
Fig. 1 shows a block diagram of a pseudo-random number generator according to one embodiment of the invention.
Fig. 2 shows a schematic of a linear feedback shift register according to one embodiment of the invention.
Figs. 3A, 3B show relative timing between stages and cycles according to one embodiment of the invention.
Fig. 4 shows a block diagram of a specific embodiment of Fig. 1 according to one embodiment of the invention.
Fig. 5 shows a flow chart of a method according to one embodiment of the invention.
Fig. 6 shows a system according to one embodiment of the invention.

### DETAILED DESCRIPTION OF THE INVENTION

In the following description, numerous specific details are set forth to provide a thorough understanding of the invention. However, it is understood that the invention may be practiced without these specific details. In other instances, well-known circuits, structures and techniques have not been shown in detail in order not to obscure the invention.

Various embodiments of the invention use the output of a numerical sequencer, such as a counter or linear feedback shift register, as periodic partial input to an iterative hash operation. To increase the randomness of the hash results, the output of the numerical sequencer may be made more random by stopping its operation for unpredictable periods of time. One embodiment runs the hash operation continually, but stops the numerical sequencer when a request for a pseudo-random number is generated and starts the numerical sequencer again at the start of the next hash stage.

An iterative hash operation is any repeating hash operation that repeatedly produces output numbers from input numbers, with at least part of each output number being fed back as input to produce the next output number. In one embodiment, a modified form of the well-known Secure Hash Algorithm (SHA) is used. A standard SHA is defined in Federal Information Processing Standards Publication 180-1, published April 17, 1995 by the U.S. Department of Commerce, Technology Administration, National Institute of Standards and Technology.

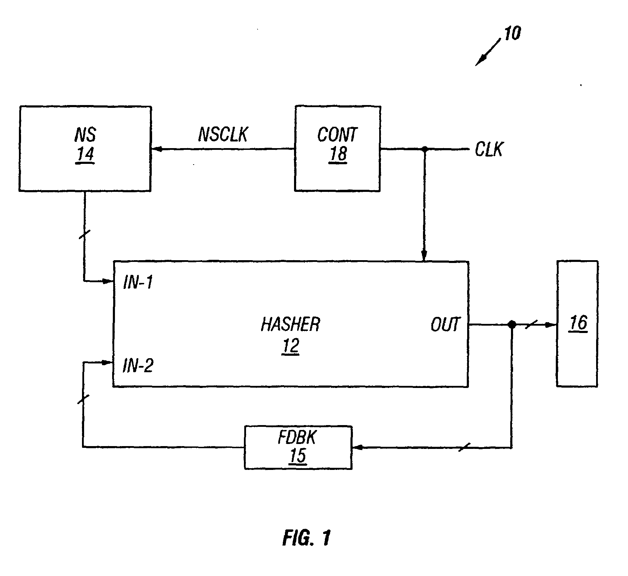

Fig. 1 shows a block diagram of a pseudo-random number generator according to one embodiment of the invention. In the illustrated embodiment of Fig. 1, pseudo-random number generator (PRNG) 10 includes hasher 12 in the form of a hashing circuit that receives combined input data at IN-1 and IN-2, performs a hash operation on the combined input data, and produces output data at OUT in the form of a pseudo-random number (PRN). In the illustrated embodiment, the clock signal CLK is used to clock the processing elements of hasher 12, and multiple clock pulses are required to produce each PRN. The PRN produced at the output is latched into register 16, from where it may be made available to devices or operations requesting a PRN. In one embodiment, each new PRN overwrites the data in register 16, thus repeatedly changing the available PRN.

Hasher 12 may receive input data from two sources. In one embodiment, IN-1 and IN-2 represent parallel groups of bits that receive data simultaneously. In another embodiment, IN-1 and IN-2 represent different inputs received at different times over the same input bits, such as through a multiplexer (not shown). In some embodiments, IN-1 and IN-2 each receive large numbers as a series of smaller numbers received sequentially.

At least a portion of the output data from hasher 12 is fed back to input IN-2 through feedback circuit 15, for use as an input to hash the next PRN. In one embodiment, feedback circuit 15 consists of direct connections from OUT to IN-2. In another embodiment, feedback circuit 15 performs an active operation on the data, such as but not limited to temporarily storing the output data and providing it in portions as needed.

To increase the randomness of the hasher output, another source of input data is provided at input IN-1 from numerical sequencer (NS) 14. NS 14 is so named because it outputs a sequence of numbers. The sequence may eventually repeat, even though the period of repetition may be very long. In the illustrated embodiment of Fig. 1, the signal NSCLK is used to clock the processing elements of NS 14. In one embodiment, NSCLK is a derivative of CLK that may be stopped and started by control circuit 18 independently of CLK, so that hasher 12 continues to run while the output ofNS 14 is stopped by a first predetermined event (such as receipt of a request for a pseudo random number), and restarted by a second predetermined event (such as the start of the next hash stage). In various embodiments, the ability to stop and start NS 14 independently of hasher 12 eliminates the synchronization that otherwise exists between NS 14 and hasher 12 if they are operated from a common clock source.

In one embodiment, NS 14 is a counter, such as a 64-bit counter, and NSCLK is used to increment (or decrement) the counter. In another embodiment, NS 14 is a linear feedback shift register (LFSR) and NSCLK is used to advance the bits through the elements of the LFSR.

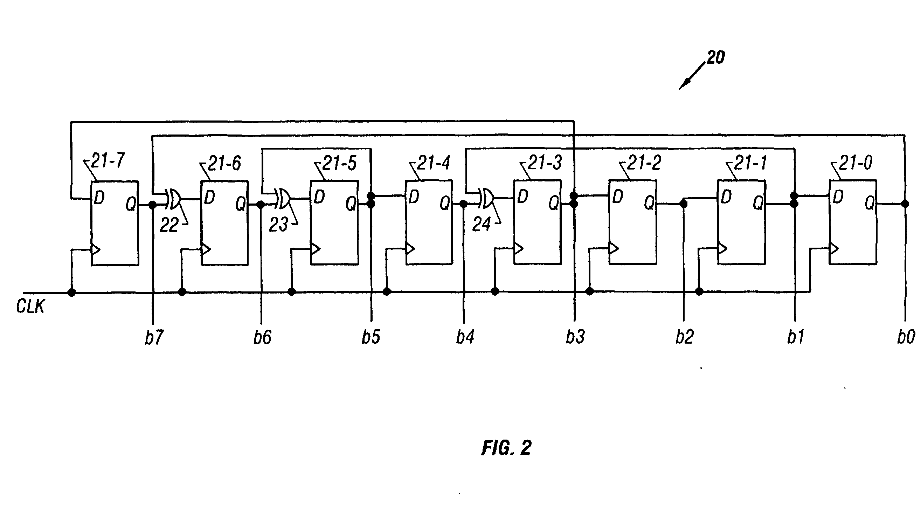

Fig. 2 shows a schematic of a linear feedback shift register according to one embodiment of the invention. In the illustrated embodiment of linear feedback shift register (LFSR) 20, flip-flops 21-0 through 21-7 produce an eight-bit number on output bits b0 - b7. The value of the number may change with each pulse of the clock signal CLK as the current value is shifted through the flip-flops and modified by exclusive OR (XOR) gates 22-24. Each XOR gate modifies the input to a given flip-flop by performing an XOR operation on the output of the previous flip-flop with the output of one of the subsequent flip-flops. In the illustrated embodiment, the input to flip-flop 21-6 is modified by gate 22 by performing an XOR operation with the values of b7 and b0, the input to flip-flop 21-5 is modified by gate 23 by performing an XOR operation with the values of b6 and b5, the input to flip-flop 21-3 is modified by gate 24 by performing an XOR operation with the values of b4 and b I, and the value of b3 is fed back to the input of flip-flop 21-7 without modification. Other embodiments may use other feedback arrangements. In one embodiment, the output of multiple flip-flops may be fed back to a single XOR gate that provides the input to flip-flop 21-7.

Due to the effect of the above-described feedback arrangements and the XOR gates, the normally predictable flow of bits through a shift register may be transformed into a pseudo-random number generator. However, the finite number of bits and the fixed nature of the feedback arrangement eventually results in a repeating sequence of output values, in a similar manner to the way a counter outputs a repeating sequence of output values. A primary difference between the counter and the LFSR in this application is that a counter goes through long periods when the upper bits are the same, thus reducing some of the unpredictability experienced at the output.

In one embodiment, LFSR 20 includes as many flip-flops as are needed to produce a PRN with the desired number of bits, such as 64 flip-flops to produce a 64-bit number. In another embodiment, multiple LFSRs may be used in parallel, with their outputs combined to form a number with the required number of bits, such as using eight 8-bit LFSRs to produce a 64-bit number. In still another embodiment, several successive output values from LFSR 20 may be combined to form a number with the required number of bits, such as taking eight successive output values from an 8-bit LFSR and combining them into a 64-bit number.

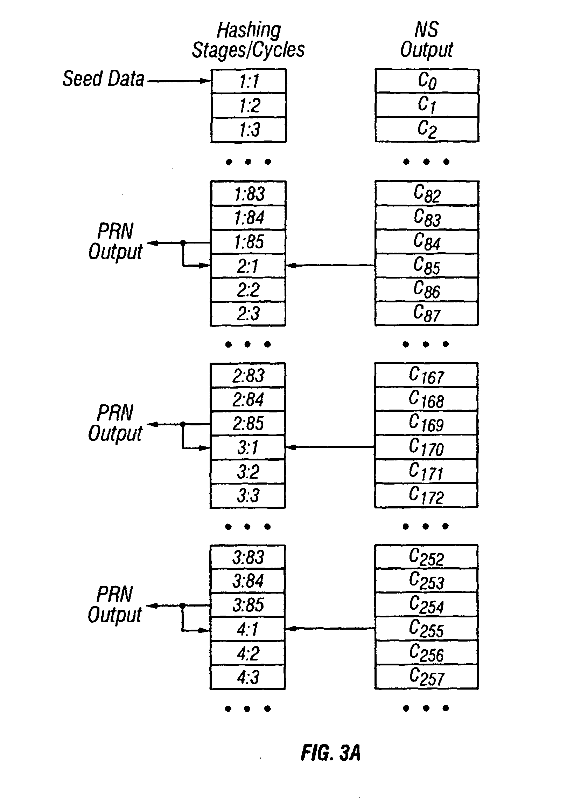

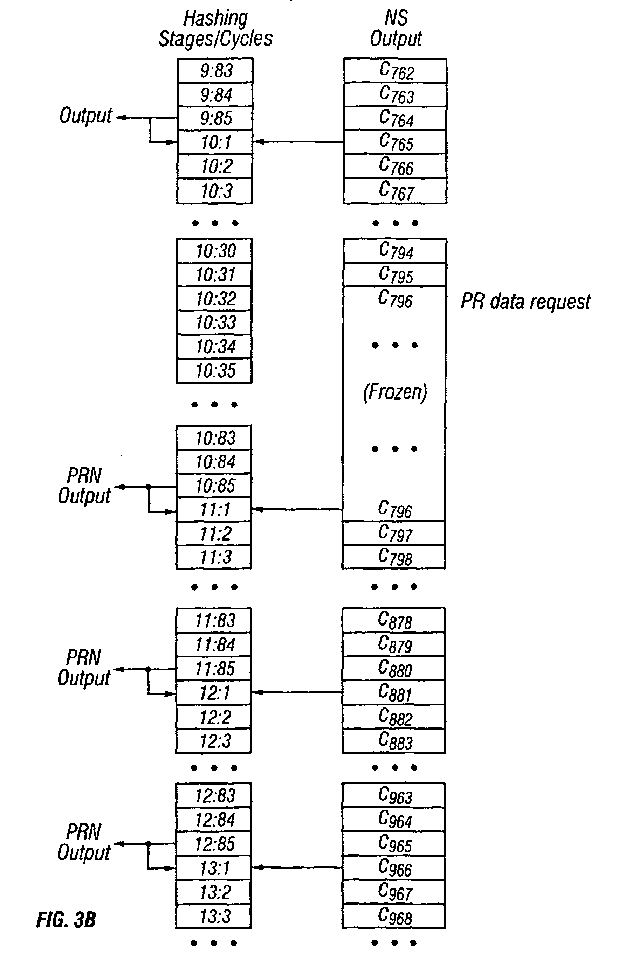

Figs. 3A, 3B show relative timing between stages and cycles according to one embodiment of the invention. Fig. 3A shows stages and cycles of an iterative hash operation and a numerical sequencer for the illustrated embodiment. A stage includes the operations necessary to produce a PRN at the PRNG output, while a cycle includes the operations necessary to produce a numerical sequencer output value. In one embodiment, a cycle is a clock cycle. In the illustrated embodiment of Fig. 3A, the hash algorithm requires 80 clock cycles to compute a hash value, plus 5 clock cycles of overhead, for a total of 85 clock cycles per stage. The terminology of the illustrated operation may be generically read as *s*:*c*, with *s* indicating the stage number 1 - n, and c indicating the cycle number 1-85 within each stage. After each stage, at least a portion of the hasher output may be placed into a register or other storage device, to be available as a PRN for any device or operation that requires a PRN. In one embodiment, the current PRN is replaced by a new PRN at the end of each stage, so that the PRN that is available to a device or operation repeatedly changes.

In some embodiments, at the beginning of each stage at least a part of the output from the previous stage is input as starting data, as shown by the looping arrows from cycle 1:85 to cycle 2:1, from cycle 2:85 to cycle 3:1, etc. This input is also shown at input IN-2 in Fig. 1. At the same time, NS 14 may be generating a sequence of new numbers. In one embodiment, each cycle produces a new number at the output of the numerical sequencer. In the illustrated embodiment of Fig. 3A, these cycles are shown as C₀, C₁, C₂, etc. At the time each hashing stage begins, at least a part of the current value of the NS output is used as part of the starting value for that stage, as shown by the right-to-left arrows in Fig. 3A. This input is also shown at IN-1 in Fig. 1. In one embodiment, the output of the NS is unrelated to the output of the hasher (i.e., the value of the NS output does not depend on the value of the hasher output), but the value of the hasher output depends on the value of the NS output. This one-way dependence increases the difficulty of deriving NS outputs based on the history of hasher outputs.

At the time the hash operation is initialized, there may be no previous result to use as input data, so seed data from any source may be used to initialize stage 1.

Fig. 3B shows a continuation of the embodiment of Fig. 3A, after the hasher has reached its 9^{th} stage and the NS has produced more than 760 output values. In the illustrated embodiment of Fig. 3B, a request for a PRN is received at the 32^{nd} cycle of the 10^{th} stage. This request may come from any source that needs to be provided with a pseudo-random number for its operation. When the request is received, the operation of the NS may be frozen so that it ceases to produce new output values every clock cycle. In one embodiment, the operation of the NS is restarted at the beginning of the next hash stage. With reference to Fig. 1, stopping and starting NS 14 may be controlled by stopping and starting clock signal NSCLK with control circuit 18. Because the exact timing of a request for a PRN is generally unpredictable, at least with respect to the PRNG, the cycle at which the NS is frozen may also be unpredictable, and therefore the number of cycles it remains frozen may likewise be unpredictable. Thus the previously synchronized operation between the hashing operation and the NS output may be interrupted by a request for a PRN, and they lose synchronization by an unpredictable number of cycles. Loss of synchronization by even one cycle may produce an entirely different set of future outputs from the hasher.

Continuing with the illustrated embodiment of Fig. 3B, when the next hash stage (stage 11) starts, the frozen value in NS 14 is provided to hasher 12 as part of the hasher's input data. At that point, operation of NS 14 may resume and NS 14 may again start producing a new output value with every clock cycle. In the illustrated embodiment of Fig. 3B, NS 14 is frozen at cycle C₇₉₆ when the request for a PRN is received. When stage 10 is completed, the frozen value of cycle C₇₉₆ is provided to hasher 12 as input to begin stage 11, and NS 14 begins producing new numbers at cycle C₇₉₇.

In the illustrated example of Fig. 3B, if NS 14 were not frozen, stage 11 would start with the value of cycle C₈₅₀. The difference between the values at C₇₉₆ and C₈₅₀ represent 54 iterations of NS 14, and may represent significantly different values with which to start stage 11. Further, the number of iterations that make up the difference is random, and may be limited only by the number of clock cycles per stage.

In one circuit embodiment, NS 14 is frozen by stopping its clock (e.g., NSCLK in Fig. 1) and restarted by restarting its clock. In one software embodiment of the hasher, NS 14 is frozen by stopping a counter or other incrementing (or decrementing) entity, either in hardware or software, and restarted by restarting that entity.

In one embodiment, the first PRN requested after the system is initialized does not benefit from freezing the NS, since the PRN is created before the first incidence of freezing, but all subsequent PRN requests do benefit from freezing the NS. This shortcoming with the first requested PRN may be avoided by initially generating one or more false requests for a PRN, which will temporarily freeze the NS and generate sufficient randomness in subsequent PRN values.

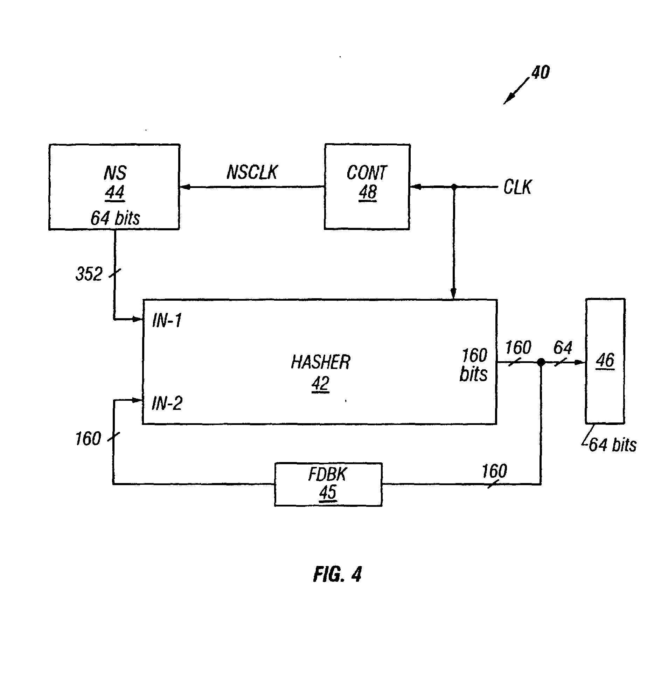

Fig. 4 shows a block diagram of a specific embodiment of Fig. 1 according to one embodiment of the invention. In the PRNG 40 of Fig. 4, hasher 42, NS 44, feedback circuit 45, register 46 and control circuit 48 correspond to hasher 12, NS 14, feedback circuit 15, register 16 and control circuit 18 of Fig. 1, respectively, with specific numbers of bits at various inputs, outputs, and connections in PRNG 40. In the embodiment of Fig. 4, only a portion of the bits produced at various places are completely used, making it more difficult to discern the internal state of the logic. If only a portion of the bits output at a given point are used, and the remaining bits are not exposed, it is more difficult to determine the internal state of any part of the circuit because only partial information is available to aid in such a determination.

In the embodiment of Fig. 4, hasher 42 receives and internally operates with 512-bit numbers, but outputs only 160 of those bits, all of which are fed back to IN-2 produce a portion of the input for the next hash stage. Only 64 of the 160 bits are placed into register 46 for use as a PRN, and these 64 bits are the only bits that are exposed external to PRNG 40. In the same embodiment, NS 44 internally produces 70 bits, using 7 LFSRs of various lengths in parallel, but only outputs 32 of those bits. In one embodiment, NS 44 outputs 11 consecutive 32-bit values to fill up the 352 bits received by hasher 42 at IN-1. When the 160 bits of hasher 42 are reduced to 64 bits, and when the 70 bits of NS 44 are reduced to 32 bits, various techniques may be used to decide which of the available bits to use. In one embodiment, a group of consecutive bits are used, and the choice of which consecutive bits is a design choice. In another embodiment, the chosen bits are not consecutive, and their order may be rearranged before being output.

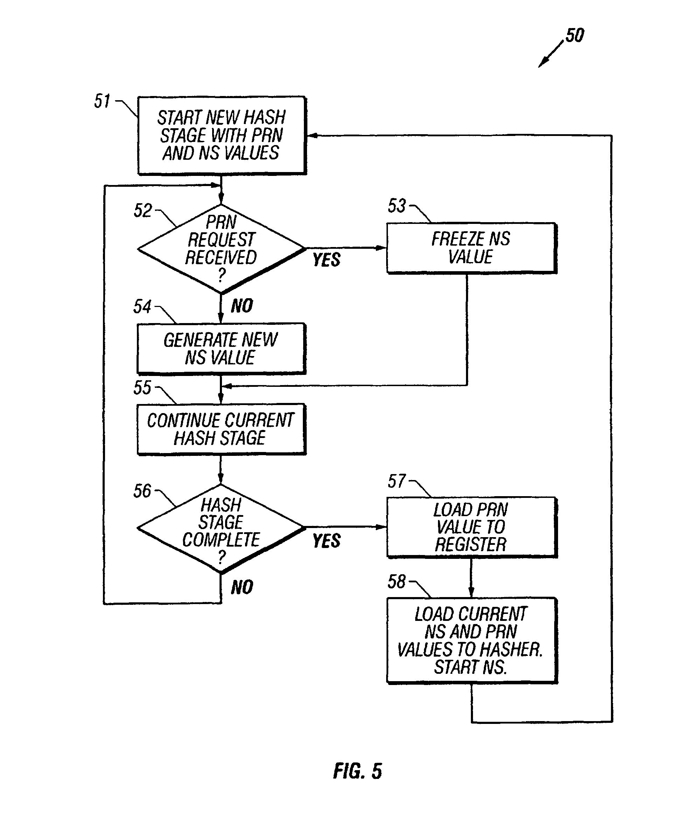

Fig. 5 shows a flow chart of a method according to one embodiment of the invention. In the flow chart 50 of the illustrated embodiment of Fig. 5, at block 51 a new hash stage is started, using the current value of a PRN and the current output of the numerical sequencer as input data. In one embodiment, the input data includes the full 160-bit previous output of the hasher, including the 64-bits of the PRN that that form a part of that output. If the system has just been initiated, these numbers may not exist yet and seed data may be used instead. Decision block 52 determines if a request has been received for a PRN. In one embodiment, once such a request is received, the answer to this decision block continues to be 'yes' until completion of the current hash stage. If a request for a PRN has been received, block 53 stops the numerical sequencer so that its output value remains frozen until the numerical sequencer is restarted. If no request has been received for a PRN, the numerical sequencer continues running and generates a new output value at block 54. Every pass through block 54 may create a new output value for the numerical sequencer, which becomes the current numerical sequencer value until it is changed. Whether or not a request for a PRN was received, the operation of the hash stage continues at block 55. In one embodiment, the clock for the hash operation and the clock for the numerical sequencer are the same frequency. Decision block 56 determines if the current hash stage has completed. If the current hash stage has not completed, control returns to block 52. If the hash stage has completed, the newly-generated PRN is loaded into a register, where it is available for subsequent PRN requests. Block 58 loads the new hasher output, including the new PRN, and the current output value of the numerical sequencer into the inputs of the hasher, where they become the starting values for the next hash stage that begins at block 51. Also, the numerical sequencer is restarted (or continues to run) so that it will be running at the start of the next hash stage.

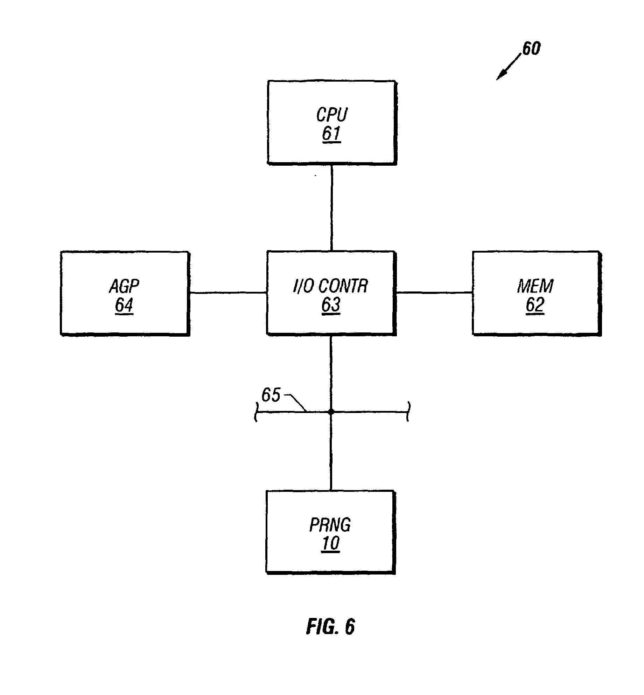

Fig. 6 shows a system according to one embodiment of the invention. In the illustrated embodiment of Fig. 6, a system 60 includes a processor 61 coupled to a PRNG 10 through an input-output (I/O) bus 65 and an I/O controller 63. The I/O controller may also be coupled to a main memory 62 and an accelerated graphics processor (AGP) 64. Other devices (not shown) may also be coupled to the system. CPU 61 may execute software to operate PRNG 10. Any device that is capable of accessing PRNG 10 over I/O bus 65 may request a PRN and read the current PRN from PRNG 10.

In various embodiments, the variability in the precise timing of a call for a PRN introduces additional randomness, or entropy, into the operation of PRNG 10 over the operation of a similar PRNG without this variability. For example, if the timing of such a call varies over just one second, and a clock cycle is 15 nanoseconds (ns) long, a request for a PRN may arrive in any of 67 million cycles ofNS 14. Since 67 million is approximately 2²⁶, this represents an entropy, or randomness, of 26 bits. When two calls are made, the two NS clock freezes represent (67 million)² possible values from NS 14, or 52 bits of entropy. Each additional call for a PRN creates an additional 26 bits of entropy. At some point, the amount of entropy from the NS will exceed the number of possible hashing sequences. This approximates the maximum amount of randomness available for the particular hash algorithm being used, and further calls may not increase the amount of randomness in the PRNG output. At this point, a brute force approach to determining the PRN may be the most efficient method of determining its value by a hostile attacker. In a data encryption environment, this may represent trying every possible combination of numbers in a decryption key to see if the result is intelligible.

### Modified Secure Hash Algorithm

In various embodiments, a modified Secure Hash Algorithm (SHA) is used in the hasher. In one embodiment that uses the quantities of bits described in Fig. 4, the modified SHA operates in the following manner:

A 512-bit input (160 bits from the previous output of hasher 42 and 352 bits from NS 44 is used by hasher 42 as input data. The main loop in the modified SHA algorithm has a total of 80 sequential operations (t = 0 to 79) in the form of four groups of twenty operations. The non-linear SHA operations are as follows:
fₜ(B,C,D) = (B ^ C) v (~B ^ D) (for t = 0 to 19)
fₜ(B,C,D) = B xor C xor D (for t = 20-39)
fₜ(B,C,D) = (B ^ C) v (B ^ D) v (C ^ D) (for t = 40-59)
fₜ(B,C,D) = B xor C xor D (for t = 60-79)
where t = the number of the operation, ^= logical AND, v = logical OR, ~ = logical complement, and xor = exclusive OR.

Four constants K and five variables A, B, C, D, and E are used in the algorithms, where their values are shown in hexadecimal notation:
Kₜ = 5A827999 (for t = 0-19)
Kₜ = 6ED9EBA1 (for t = 20-39)
Kₜ = 8F1BBCDC (for t = 40-59)
Kₜ = CA62C 1 D6 (for t = 60-79)

Initial values for variables:
A₀ = 67452301
B₀ = EFCDAB89
C₀ = 98BADCFE
D₀ = 10325476
E₀ = C3D2E1F0

The input data is transformed from sixteen 32-bit words (M₀ - M₁₅) into eighty 32-bits words (W₀ - W₇₉) using the following algorithm:
Wₜ = Mₜ (for t = 0-15)
Wₜ = (Wₜ₋₃ xor Wₜ₋₈ xor Wₜ₋₁₄ xor Wₜ₋₁₆) <<< 1 (for t = 16-79),
where <<< 1 = left shift one bit.

The main loop of the algorithm looks like this:

For t = 0 to 79,
TEMP = (A <<< 5) + Fₜ(B,C,D) + Eₜ + Wₜ +Kₜ
E=D
D=C
C = B <<< 30
B=A
A = TEMP

After 80 loops, the output of the modified SHA algorithm is the 160-bit string represented by ABCDE. In one embodiment, a 64-bit portion of this string is saved in register 46 as the current PRN, while the entire 160 bits is fed back to the input of hasher 42 to serve as part of the initial input data for the next hash stage. As previously described, the bits may be rearranged before being saved and/or fed back.

The aforementioned description describes one embodiment of the invention using a modified SHA algorithm, but other algorithms may be used without departing from the spirit of the invention.

The invention may be implemented in circuitry or as a method. The invention may also be implemented as instructions stored on a machine-readable medium, which may be read and executed by at least one processor to perform the operations described herein. A machine-readable medium may include any mechanism for storing or transmitting information in a form readable by a machine (e.g., a computer). For example, a machine-readable medium may include read only memory (ROM); random access memory (RAM); magnetic disk storage media; optical storage media; flash memory devices; electrical, optical, acoustical or other form of propagated signals (e.g., carrier waves, infrared signals, digital signals, etc.), and others.

The foregoing description is intended to be illustrative and not limiting. Variations will occur to those of skill in the art. Those variations are intended to be included in the invention, which is limited only by the scope of the appended claims.

## Claims

1. An apparatus, comprising:
a hash circuit to receive first and second input values for a current hash stage and to generate an output value from the current hash stage based on the first and second input values;
a numerical sequencer coupled to the hash circuit to generate a sequence of numbers during the current hash stage and to provide at least a portion of a current one of the sequence of numbers as the first input value for a subsequent hash stage;
**characterised in that** it further comprises:
a feedback circuit coupled to the hash circuit to provide at least a portion of the output value as the second input value for the subsequent hash stage; and
a control circuit coupled to the numerical sequencer to stop generating the sequence of numbers upon an occurrence of a first predetermined event and to resume generating the sequence of numbers upon an occurrence of a second predetermined event.

2. The apparatus of claim 1, wherein:
the hash circuit is arranged to receive the first and second input values at a beginning of the current hash stage.

3. The apparatus of claim 1, wherein:
the first predetermined event includes receipt of a request for a pseudo-random number.

4. The apparatus of claim 1, wherein:
the second predetermined event includes a part of the subsequent hash stage.

5. The apparatus of claim 1, wherein:
the second predetermined event includes a beginning of the subsequent hash stage.

6. The apparatus of claim 1, wherein:
The numerical sequencer includes a counter.

7. The apparatus of claim 1, wherein:
the numerical sequencer includes a linear feedback shift register.

8. The apparatus of claim 1, wherein:
said at least a portion of the current one of the sequence of numbers includes predetermined bits of the current one of the sequence of numbers.

9. The apparatus of claim 1, wherein:
said at least a portion of the output value includes predetermined bits of the output value.

10. A system, comprising:
a processor;
a memory coupled to the processor; and
a pseudo-random number generator coupled to the processor and including the apparatus pf any one of claims 1 to 9.

11. A method, comprising:
generating a series of values during each of a previous hash stage, a current hash stage, and a subsequent hash stage;
receiving one of the values as a first hash input;
receiving a hash output from the previous hash stage as a second hash input; hashing the first and second hash inputs during a current hash stage to produce a current hash output;
stopping the generating when a first predetermined event occurs and restarting the generating when a second predetermined event occurs, if the first predetermined event occurs during the current hash stage; and
continuing the generating during the current hash stage, if the first predetermined event does not occur during the current hash stage.

12. The method of claim 11, wherein:
the first predetermined event includes receiving a request for a pseudo-random number.

13. The method of claim 11, wherein:
the second predetermined event includes a beginning of the subsequent hash stage.

14. A machine-readable medium having stored thereon instructions, which when executed by at least one processor cause said at least one processor to carry out the method of claim 11, 12 or 13.

## Patentansprüche

1. Vorrichtung, umfassend:
eine Hash-Schaltung zum Empfang eines ersten und eines zweiten Eingabewertes für einen aktuellen Hashdurchgang und zum Erzeugen eines Ausgabewertes des aktuellen Hashdurchgangs basierend auf dem ersten und dem zweiten Eingabewert,
einen Zahlenfolgegenerator, der an die Hash-Schaltung gekoppelt ist, zur Erzeugung einer Zahlenfolge während des aktuellen Hashdurchgangs und zum Bereitstellen mindestens eines Teiles einer aktuellen Zahl aus der Zahlenfolge als ersten Eingabewert für einen folgenden Hashdurchgang,
**dadurch gekennzeichnet, dass** sie weiterhin Folgendes umfasst:
eine Rückführungsschaltung, die an die Hash-Schaltung gekoppelt ist, zum Bereitstellen mindestens eines Teiles des Ausgabewertes als zweiten Eingabewert für den folgenden Hashdurchgang, und
eine Steuerschaltung, die an den Zahlenfolgegenerator gekoppelt ist, zum Anhalten der Erzeugung der Zahlenfolge bei Auftreten eines ersten vorbestimmten Ereignisses, und zur Wiederaufnahme der Erzeugung der Zahlenfolge bei Auftreten eines zweiten vorbestimmten Ereignisses.

2. Vorrichtung nach Anspruch 1, wobei:
die Hash-Schaltung zum Empfang des ersten und des zweiten Eingabewertes zu einem Beginn des aktuellen Hashdurchgangs ausgebildet ist.

3. Vorrichtung nach Anspruch 1, wobei:
das erste vorbestimmte Ereignis den Empfang einer Anforderung nach einer Pseudozufallszahl umfasst.

4. Vorrichtung nach Anspruch 1, wobei:
das zweite vorbestimmte Ereignis einen Teil des folgenden Hashdurchgangs umfasst.

5. Vorrichtung nach Anspruch 1, wobei:
das zweite vorbestimmte Ereignis einen Beginn des folgenden Hashdurchgangs umfasst.

6. Vorrichtung nach Anspruch 1, wobei:
der Zahlenfolgegenerator einen Zähler umfasst.

7. Vorrichtung nach Anspruch 1, wobei:
der Zahlenfolgegenerator ein linear rückgekoppeltes Schieberegister umfasst.

8. Vorrichtung nach Anspruch 1, wobei:
der Teil der aktuellen Zahl aus der Zahlenfolge vorbestimmte Bits der aktuellen Zahl aus der Zahlenfolge umfasst.

9. Vorrichtung nach Anspruch 1, wobei:
der Teil des Ausgabewerts vorbestimmte Bits des Ausgabewerts umfasst.

10. System, umfassend:
einen Prozessor,
einen Speicher, der an den Prozessor gekoppelt ist,
einen Pseudozufallszahlengenerator, der an den Prozessor gekoppelt ist und die Vorrichtung nach einem der Ansprüche 1 bis 9 umfasst.

11. Verfahren, das Folgendes umfasst:
Erzeugen einer Reihe von Werten jeweils während eines vorherigen Hashdurchgangs, eines aktuellen Hashdurchgangs und eines folgenden Hashdurchgangs,
Empfangen eines der Werte als erste Hasheingabe,
Empfangen einer Hashausgabe des vorherigen Hashdurchgangs als zweite Hasheingabe,
Hashen der ersten und der zweiten Hasheingabe während eines aktuellen Hashdurchgangs, um so eine aktuelle Hashausgabe zu schaffen,
Anhalten der Erzeugung, wenn ein erstes vorbestimmtes Ereignis auftritt, und Wiederaufnahme der Erzeugung, wenn ein zweites vorbestimmtes Ereignis auftritt, sofern das erste vorbestimmte Ereignis während des aktuellen Hashdurchgangs auftritt, und
Fortfahren mit der Erzeugung während des aktuellen Hashdurchgangs, sofern das erste vorbestimmte Ereignis nicht während des aktuellen Hashdurchgangs auftritt.

12. Verfahren nach Anspruch 11, wobei:
das erste vorbestimmte Ereignis das Empfangen einer Anforderung nach einer Pseudozufallszahl umfasst.

13. Verfahren nach Anspruch 11, wobei:
das zweite vorbestimmte Ereignis einen Beginn des folgenden Hashdurchgangs umfasst.

14. Maschinenlesbares Medium, auf welchem Befehle gespeichert sind, die, wenn sie von mindestens einem Prozessor ausgeführt werden, den mindestens einen Prozessor dazu veranlassen, das Verfahren nach Anspruch 11, 12 oder 13 auszuführen.

## Revendications

1. Un appareil, comprenant :
un circuit de hachage pour recevoir des première et seconde valeurs d'entrée pour une phase de hachage présente, et pour générer une valeur de sortie à partir de la phase de hachage présente sur la base des première et seconde valeurs d'entrée;
un séquenceur numérique couplé au circuit de hachage pour générer une séquence de nombres pendant la phase de hachage présente, et pour fournir au moins une partie d'un nombre présent de la séquence de nombres pour la première valeur d'entrée pour une phase de hachage suivante;
**caractérisé en ce qu'**il comprend en outre :
un circuit de rétroaction couplé au circuit de hachage pour fournir au moins une partie de la valeur de sortie pour la seconde valeur d'entrée pour la phase de hachage suivante; et
un circuit de commande couplé au séquenceur numérique pour arrêter la génération de la séquence de nombres sous l'effet d'une réalisation d'un premier événement prédéterminé et pour reprendre la génération de la séquence de nombre sous l'effet d'une réalisation d'un second événement prédéterminé.

2. L'appareil de la revendication 1, dans lequel :
le circuit de hachage est arrangé pour recevoir les première et seconde valeurs d'entrée à un début de la phase de hachage présente.

3. L'appareil de la revendication 1, dans lequel :
le premier événement prédéterminé comprend la réception d'une demande d'un nombre pseudo-aléatoire.

4. L'appareil de la revendication 1, dans lequel :
le second événement prédéterminé comprend une partie de la phase de hachage suivante.

5. L'appareil de la revendication 1, dans lequel :
le second événement prédéterminé comprend un début de la phase de hachage suivante.

6. L'appareil de la revendication 1, dans lequel :
le séquenceur numérique comprend un compteur.

7. L'appareil de la revendication 1, dans lequel :
le séquenceur numérique comprend un registre à décalage de rétroaction linéaire.

8. L'appareil de la revendication 1, dans lequel :
l'au moins une partie du nombre présent de la séquence de nombres comprend des bits prédéterminés du nombre présent de la séquence de nombres

9. L'appareil de la revendication 1, dans lequel :
l'au moins une partie de la valeur de sortie comprend des bits prédéterminés de la valeur de sortie.

10. Un système, comprenant :
un processeur;
une mémoire couplée au processeur; et
un générateur de nombres pseudo-aléatoires couplé au processeur et incluant l'appareil de l'une quelconque des revendications 1 à 9.

11. Un procédé comprenant :
la génération d'une série de valeurs pendant chacune d'une phase de hachage précédente, d'une phase de hachage présente et d'une phase de hachage suivante;
la réception de l'une des valeurs comme une première valeur d'entrée de hachage;
la réception d'une valeur de sortie de hachage de la phase de hachage précédente comme une seconde valeur d'entrée de hachage;
le hachage des première et seconde valeurs d'entrée de hachage pendant une phase de hachage présente, pour produire une valeur de sortie de hachage présente;
l'arrêt de la génération lorsqu'un premier événement prédéterminé se produit et le redémarrage de la génération lorsqu'un second événement prédéterminé se produit, si le premier événement prédéterminé se produit pendant la phase de hachage présente; et
la poursuite de la génération pendant la phase de hachage présente, si le premier événement prédéterminé ne se produit pas pendant la phase de hachage présente.

12. Le procédé de la revendication 11, dans lequel :
le premier événement prédéterminé comprend la réception d'une demande d'un nombre pseudo-aléatoire.

13. Le procédé de la revendication 11, dans lequel :
le second événement prédéterminé comprend un début de la phase de hachage suivante.

14. Un support lisible par machine sur lequel sont stockées des instructions qui, lorsqu'elles sont exécutées par au moins un processeur, font accomplir à l'au moins un processeur le procédé de la revendication 11, 12 ou 13.
